# EUROPEAN PATENT SPECIFICATION

(11) **EP 2 713 185 B1**
(45) Date of publication and mention of the grant of the patent: **07.11.2018**
(21) Application number: 13186539.6
(22) Date of filing: 27.09.2013
(51) Int. Cl.: G01V 1/30, G01V 1/28

(54) **METHOD AND APPARATUS TO DETECT AND ANALYZE SEISMIC SIGNALS**
PROCÉDÉ ET DISPOSITIF POUR LA DÉTECTION ET ANALYSE DE SIGNAUX SISMIQUES
VERFAHREN UND VORRICHTUNG ZUR ERKENNUNG UND ANALYSE SEISMISCHER SIGNALE

(30) Priority: 28.09.2012 IT UD20120167
(43) Date of publication of application: 02.04.2014
(73) Proprietor: Dal Moro Giancarlo Ditta Individuale, 33057 Palmanova (UD) (IT)
(72) Inventor: Dal Moro, Giancarlo, 33057 Palmanova (UD) (IT)
(74) Representative: Petraz, Gilberto Luigi

(56) References cited:
- MICHAEL H. RITZWOLLER ET AL: "Estimating shallow shear velocities with marine multicomponent seismic data", GEOPHYSICS, vol. 67, no. 6, 1 November 2002 (2002-11-01), pages 1991-2004, XP055069653, ISSN: 0016-8033, DOI: 10.1190/1.1527099
- FRANK SCHERBAUM ET AL: "Determination of shallow shear wave velocity profiles in the Cologne, Germany area using ambient vibrations", GEOPHYSICAL JOURNAL INTERNATIONAL, vol. 152, no. 3, 1 March 2003 (2003-03-01) , pages 597-612, XP055069593, ISSN: 0956-540X, DOI: 10.1046/j.1365-246X.2003.01856.x
- G. DAL MORO: "Some aspects about surface wave and HVSR analyses: a short overview and a case study", BOLLETTINO DI GEOFISICA TEORICA ED APPLICATA, vol. 52, no. 2, 1 June 2011 (2011-06-01), pages 1-19, XP055069816, DOI: 10.4430/bgta0007
- GIANCARLO DAL MORO ET AL: "Joint analysis of Rayleigh- and Love-wave dispersion: Issues, criteria and improvements", JOURNAL OF APPLIED GEOPHYSICS, ELSEVIER, AMSTERDAM, NL, vol. 75, no. 3, 13 September 2011 (2011-09-13), pages 573-589, XP028102304, ISSN: 0926-9851, DOI: 10.1016/J.JAPPGEO.2011.09.008 [retrieved on 2011-09-19]
- HOBIGER M ET AL: "Multicomponent Signal Processing for Rayleigh Wave Ellipticity Estimation: Application to Seismic Hazard Assessment", IEEE SIGNAL PROCESSING MAGAZINE, IEEE SERVICE CENTER, PISCATAWAY, NJ, US, vol. 29, no. 3, 1 May 2012 (2012-05-01), pages 29-39, XP011460462, ISSN: 1053-5888, DOI: 10.1109/MSP.2012.2184969

## Description

### FIELD OF THE INVENTION

The present invention concerns a method and apparatus to detect or acquire and analyze data of a seismic nature, used to determine the mechanical characteristics, such as velocities of the elastic waves, in particular shear waves, and geometric characteristics, that is, the thickness of the layers of the subsurface.

### BACKGROUND OF THE INVENTION

In the characterization of a site performed in relation to seismic risk studies, and geotechnical and environmental studies, it is known that it is of fundamental importance to know the profile of the shear-wave velocities (V_{S}).

The seismic methods currently used in the analysis of surface waves, which are particularly useful for determining the vertical profile of the shear-wave velocities (V_{S}), can be summarized as follows:
- the MASW method (Multichannel Analysis of Surface Waves), the ReMi method (Refraction Microtremors) and the SPAC/ESAC methods (Spatial AutoCorrelation and Extended Spatial AutoCorrelation), which consider phase velocities;
- the MFA method (Multiple Filter Analysis) or the FTAN method (Frequency - Time Analysis), which consider group velocities;
- the HVSR (Horizontal-to-Vertical Spectral Ratio) method
- the refraction and/or reflection seismic methods.

The HVSR method (Horizontal-to-Vertical Spectral Ratio), and other similar passive techniques, is a so-called passive method, that is, there is no single and controlled seismic source with known characteristics but a quantity of signals arriving from different sources, unknown in their position and characteristics. In the HVSR and similar methods a tri-axial geophone is used, with three sensors/geophones in directions x, y and z, for example north-south, east-west, vertical, suitably calibrated and equalized, and the vibrations of the ground are recorded, determined by "ambient noise", that is, everything that exists and is propagated due not only to natural phenomena but also to anthropic/industrial ones (microtremors).

The data are then processed, in the frequency domain, so as to obtain the amplitude ratio between the horizontal component (result/composition of the x and y axes) and the vertical component (z) (H/V Spectral Ratio).

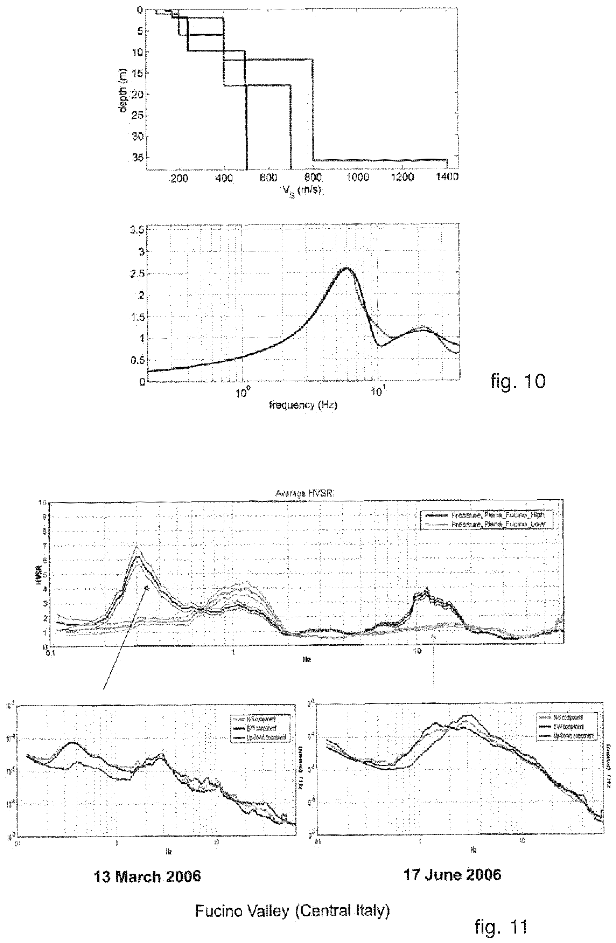

With the purpose of obtaining information on the V_{S} vertical profile, the HVSR ratio obtained from the field data is then modeled/inverted. The modeling has various difficulties/problems including:
i) the model thus obtained is subject to extreme non-uniqueness of the solution. That is, an HVSR curve can be explained, by a plurality of subsurface models, and it is therefore impossible in practice to reconstruct the model of the subsurface without the aid of further geological and/or geophysical data (see fig. 10). This problem must also be considered in relation to the uncertain determination of the HVSR curve itself;
ii) the modeling criteria are to a large extent aleatory, since it is not possible to define in advance the following factors, which together are responsible for the measured HVSR:
   a) the relations between body and surface waves;
   b) the ratio between Rayleigh and Love waves and the values of the quality factors which regulate the propagation of the waves.
iii) the H/V Spectral Ratio determined by microtremors (passive seismics) is subject to weather and seasonal variations. In fact, the stresses such as micro-earthquakes, sea/ocean wave motion, barometric oscillations, responsible for the microtremors and hence the HVSR observed, can vary over the time. Consequently, the very nature of the datum that has to be modeled/inverted in order to find information on the vertical V_{S} profile, in some cases (which cannot be defined in advance), is in itself subject to a considerable degree of ambiguity and uncertainty.
iv) since the sources have a passive character, specific directivities of the signal are possible, because the signals come from particular directions, which create other ambiguities: the HVSR curves are different depending on the azimuth considered and the mean curve, calculated as mean value all over 360°, can be little significant, also considering possible effects related to the site topography.

It must be underlined how the HVSR curve observed does not represent the ellipticity of the Rayleigh waves, as is simplistically/crudely stated in some publications, see for example Hobiger et al., 2012 Multi component Signal Processing for Rayleigh Wave Ellipticity Estimation: Application to Seismic Hazard Assessment. IEEE Signal Processing Magazine, 29(3): 29-39. It is in fact the result of the joint action of different sources (Asten and Henstridge, 1984 Array estimators and the use of microseisms for reconnaissance of sedimentary basins: Geophysics, 49, 1828-1837) and consequently of different types of waves other than Rayleigh waves. To these indeed must be added the fundamental contribution of Love waves (see for instance Bonnefoy-Claudet et al., 2008 Effects of Love waves on microtremors H/V ratio, Bull. Seism. Soc. America, 98: 288 - 300, and Lunedei and Albarello, 2009, On the seismic noise wavefield in a weakly dissipative layered Earth, Geophys. J. Int., 177, 1001-1014) and body waves (Albarello and Lunedei, 2010, Alternative interpretations of horizontal to vertical spectral ratios of ambient vibrations: new insights from theoretical modeling. Bulletin of Earthquake Engineering 8, 519-534).

It is impossible to separate the contribution of the individual waves/components and this represents one of the problems of this method (ambiguity in the modeling parameters/criteria). In fact, all the passive methods are based on the recording of two horizontal components that are perpendicular with respect to each other (as well as the vertical component), whereas in this description it is sufficient to use one at least bi-axial geophone.

The ellipticity of Rayleigh waves is certainly known in theory - in Mubashir et al., 2006, Spectrum Analysis of seismic surface waves and its applications in seismic landmine detection. J. Acoust. Soc. Am., 121, 1499-1509, a short mathematical treatise is given on the subject, but this characteristic of the Rayleigh wave is not then used in the analysis method proposed by these authors - but it has never been used for diagnostic purposes.

As described before, the numerous passive methods that are described in literature (of which HVSR is the best known) derive from the analysis of signals that have an unknown source with regard to position and characteristics, and therefore do not define the ellipticity of the Rayleigh waves but a much more complex "object" determined by a complex multiplicity of waves/events whose individual components are very difficult to separate, unless of some *a priori* assumptions (among the many problems inherent to this passive approach it should also be considered that the ellipticity of the Rayleigh waves is, among other things, also a function of the distance between the source and the receiver).

Exploiting the ellipticity from active seismic data has already been done, for example see US-A-5,781,502, but this document suffers from the following disadvantages:
a) the ellipticity is determined/computed in an extremely articulated manner (useful for the specific field of use inside which the document is applied) with a considerable intervention by the user in choosing the parameters necessary to carry out the analysis;
b) the ellipticity is the only "object" considered, and subsequently the identified (elliptical) signals are attenuated/eliminated from the dataset.

These two characteristics of the document are totally useless with respect to the present description: the first point a) would make the analysis procedures much more articulated than those used in this description, while the second point b), that is, having available only an estimate of the ellipticity of the Rayleigh wave, would be completely useless for the diagnostic purposes of the present description.

The MFA (Multiple Filter Analysis) and FTAN (Frequency - Time ANalysis) methods are briefly discussed here together since they have the same result and provide absolutely identical performances, although their mathematical development is slightly different. In particular, these methods are "active" and rely on geophones with a single component and, starting from a seismic trace whose position with respect to the known source of the signal is known, and whose energization moment must also be known, they allow to determine the group-velocity spectrum of the produced surface wave.

The main problem of the MFA and FTAN methods is that the way in which the different propagation modes of the surface waves interlace can be extremely complex, and consequently the analyses can also be extremely complex.

In the traditional method, the analysis is carried out by identifying the dispersion curves of the modes present in the velocity spectrum/a (group-velocity spectra for the MFA/FTAN methods and phase-velocity spectra for the MASW/ReMi/ESAC methods) of the field dataset.

Cases may occur where, in certain frequency ranges, the signal is not associable with a single, easily identifiable mode.

If the signal is the result of a complex interlacing of modes, its interpretation in terms of dispersion curves, subsequently inverted, is extremely problematic and an erroneous interpretation of the dispersion curves necessarily leads to an erroneous V_{S} profile.

Furthermore, at low frequencies, the signal is typically so poorly defined that it is not possible to trace the development of the mode(s) responsible for the observed signal. To give a "name" to the modes responsible for the signals is in fact impossible. There are cases for example where the fundamental mode is totally absent and if the mode that is in practice dominant is a higher mode, an erroneous interpretation of it as fundamental mode would inevitably lead to an erroneous reconstruction of the subsurface model, see for example Dal Moro, 2012, Onde di superficie in Geofisica Applicata - acquisizione ed analisi secondo le tecniche MASW e HVSR, pp. 191, ISBN 978-8857901169, Dario Flaccovio Editore; Dal Moro, 2013, Joint Analysis of Lunar Surface Waves: the Apollo 16 dataset, EAGE Near Surface 2013, Proceedings of the 19th European Meeting of Environmental and Engineering Geophysics, Bochum, Germany, 9-11 September 2013.

Further, Scherbaum F. et al.: "Determination of shallow shear wave velocity profiles in the Cologne, Germany area using ambient vibrations",GEOPHYSICAL JOURNAL INTERNATIONAL, vol. 152, no. 3, 1 March 2003 (2003-03-01), pages 597-612, discloses a joint inversion of phase-velocity dispersion curves of Rayleigh waves together with the HVSR data.

Dal Moro G.: "Some aspects about surface wave and HVSR analyses: a short overview and a case study",BOLLETTINO DI GEOFISICA TEORICA ED APPLICATA, vol. 52, no. 2, 1 June 2011 (2011-06-01), pages 1-19, discloses a joint inversion of phase-velocity dispersion curves of Rayleigh and Love waves together with the HVSR data. Purpose of the present invention is to perfect a method to detect and analyze seismic signals, and to produce a corresponding apparatus, which on the one hand are simple to set during the field data acquisition, as they do not require any burdensome effort and are economical and practical to install, and on the other hand provide results that are reasonably free of ambiguity, well-constrained and univocal.

The Applicant has devised, tested and embodied the present invention to overcome the shortcomings of the state of the art and to obtain these and other purposes and advantages.

Unless otherwise defined, all the technical and scientific terms used here and hereafter have the same meaning as commonly understood by a person with ordinary experience in the field of the art to which the present invention belongs.

Even if methods and materials similar or equivalent to those described here can be used in practice and in the trials of the present invention, the methods and materials are described hereafter as an example. In the event of conflict, the present application shall prevail, including its definitions. The materials, methods and examples have a purely illustrative purpose and shall not be understood restrictively.

### SUMMARY OF THE INVENTION

The present invention is set forth and characterized in the independent claims, while the dependent claims describe other characteristics of the invention or variants to the main inventive idea.

In accordance with the above purpose, the Applicant proposes a method, according to claim 1, and a corresponding apparatus, according to claim 11, to detect and analyze seismic signals of the active type, that is, for the diagnosis of seismic signals of the active type.

Advantageously, an active method is executed, which generates an artificial vibration and uses at least one geophone at least bi-axial, but without excluding the use of a tri-axial geophone.

According to the present invention, three mathematical objects are evaluated, deriving from the detections made using said geophone, which include the oscillation associated with the artificial vibration generated in its radial component, the one in the vertical component and the ellipticity of the Rayleigh wave produced, expressed by the spectral ratio between the radial component and the vertical one - Radial-to-Vertical Spectral Ratio, RVSR or R/V.

In particular, it is provided to cause or generate a source of artificial vibration of the ground and to analyze the Rayleigh waves produced, considering jointly, that is, simultaneously and unitarily, inside the same inversion/analysis instrument, the three mathematical objects defined above.

Furthermore, some forms of embodiment provide to detect at least the vertical component and the radial component of the artificial vibration produced. For the radial and vertical components the developments of the amplitudes over time are detected.

Furthermore, some forms of embodiment provide to calculate the spectral ratio between the radial and vertical components, which defines the ellipticity of the Rayleigh wave.

Advantageously, it is provided an inversion procedure by means of which the shear-wave velocities (Vₛ) are determined, based on the joint analysis of said three mathematical objects.

It is fundamental here to underline that what essentially characterizes the present invention is the fact that the mathematical objects are exploited by the analysis /inversion method jointly, that is, simultaneously/together.

The present invention also concerns an apparatus to detect and analyze seismic signals as specified in claim 11.

### BRIEF DESCRIPTION OF THE DRAWINGS

These and other characteristics of the present invention will become apparent from the following description of one form of embodiment, given as a non-restrictive example with reference to the attached drawings wherein:
- fig. 1 shows an HVSR graph (classic passive method a)) and ellipticity of the Rayleigh waves (determined as spectral ratio of the radial component alone with respect to the vertical component (RVSR) and subsequently used, jointly with the of group-velocity frequency spectra of the radial and vertical components, according to the present invention b)) acquired in the same site;
- fig. 2 is a schematic representation of the data acquisition for analysis according to the present invention;
- fig. 3 shows a frame of a software application during the determination of the dispersive properties (radial and vertical components and ellipticity) of the signal acquired on the field in active mode;
- fig. 4 shows a frame of a software application during the inversion procedure;
- fig. 5 shows two different perspectives of a tri-objective space of the outcomes of an inversion;

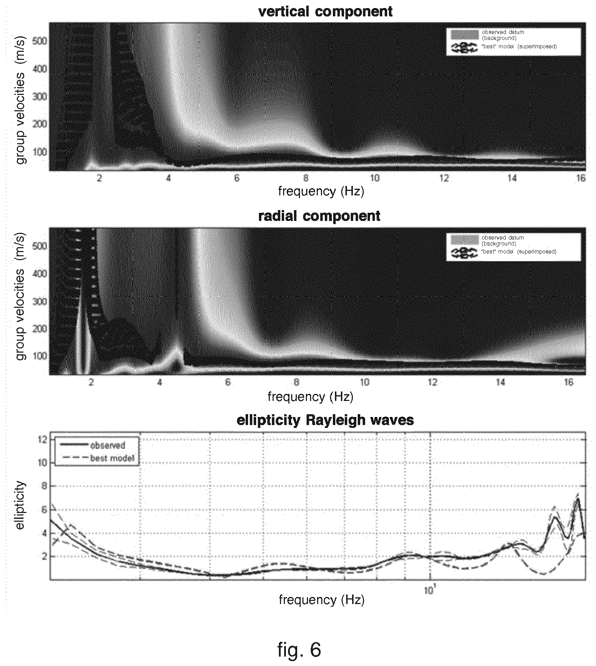

- fig. 6 shows an example of the results obtained by the inversion showing the frequency spectrums of group velocities of the vertical and radial components of the Rayleigh wave observed on the field (in shades of gray) and, superimposed with black contour lines, the group-velocity spectra of the radial and vertical components of the final identified model; in the lower panel the RVSR of the field data is shown and, superimposed, that of the final model identified (note how the result was obtained without any data interpretation in terms of dispersion curves, which on the contrary is necessary in classic methods of the known type);
- fig. 7 shows the Vₛ profile identified (indicated as "best model"), those of the Pareto front and the mean model (among the Pareto front ones);
- fig. 8 is a schematic representation of a variant of the present invention;
- fig. 9 is an example of a phase-velocity frequency spectrum from a multi-channel acquisition;
- fig. 10 shows the non-uniqueness of the H/V spectral ratio: a multitude of subsurface models can correspond to the same HVSR curve;
- fig. 11 shows the variations in the H/V spectral ratio as the weather-seasonal conditions vary, in two different periods of the year (taken from Albarello, 2006, Possible Effects of Regional Meteoclimatic Conditions on hvsr, nato SfP980857-11° Intermediate Meeting, Dubrovnik 25-27 November 2006, open file (http://nato.gfz.hr/Presentation_Albarello.pdf);
- figs. 12 and 13 show graphical examples to show the differences between HVSR (from passive seismics) and RVSR (from active seismics).

### DETAILED DESCRIPTION OF SOME FORMS OF EMBODIMENT

We shall now refer in detail to the various forms of embodiment of the present invention, of which one or more examples are shown in the attached drawings. Each example is supplied by way of illustration of the invention and shall not be understood as a limitation thereof. For example, the characteristics shown or described insomuch as they are part of one form of embodiment can be adopted on, or in association with, other forms of embodiment to produce another form of embodiment. It is understood that the present invention shall include all such modifications and variants.

Some forms of embodiment of the present invention concern a method and apparatus 10 to detect and analyze seismic signals which, generating a wave of artificial vibration by means of a source whose position is known, detects, by means of at least one geophone, at least bi-axial or tri-axial, the radial component Cᵣ and vertical component Cᵥ, and also the ellipticity of the Rayleigh waves associated with said vibration wave.

The source of the vibration can be either a vertical force, for example from a hammer or weight drop, or an explosive charge at shallow depth.

We maintain that the method and apparatus as above allow to use jointly the information detected thanks to acquisitions of a purely active nature and relating to the group-velocity frequency spectra of the radial component Cᵣ and the vertical component Cᵥ of the Rayleigh wave and its ellipticity, expressed as the spectral ratio between the radial and vertical component.

In some forms of embodiment, the method and apparatus according to the present invention allow clarity in the modeling principles and, thanks to the constraints mutually provided by the RVSR and the group-velocity frequency spectra of the radial component Cᵣ and vertical component Cᵥ of the Rayleigh wave, they also allow the non-uniqueness of the solution to be overcome.

We maintain that the acquisition and analysis method devised is characterized by a particular streamlining, in particular in the data acquisition procedures, that is, it requires a limited effort for the data acquisition, with a highly automated analysis procedure which, despite the simple and rapid data acquisition procedures on the field, is particularly robust, that is, it is able to supply an accurate model of the subsurface, in particular the shear-wave velocities of the different layers.

Important advantages of the present invention compared with known methods are:
1) rapid acquisition of data since, to obtain significant data, passive methods require a tri-axial geophone (consisting of a vertical geophone and two horizontal geophones perpendicular to each other), rather long acquisition times (not less than about twenty minutes) and in some cases it would actually necessary to repeat the measurements in different days/seasons (different weather-seasonal effects on two different days can generate totally different HVSR campaign curves - see Albarello, 2006 and fig. 11). The considerable difference between the two HVSR curves in fig. 11 shows a serious problem for all passive data acquisition methods considered for analyzing surface waves. For further examples see Dal Moro 2012. Since the present invention is based on a known and repeatable source - active seismics - this problem does not arise (the ellipticity determined in active mode from a controlled source is necessarily stable). With the present invention, since it deals with an exclusively active method, the data acquisition time is of few seconds (indicatively from 0.5 to 4 seconds, depending on the source-geophone distance and the type of sediments/rocks locally present) and a bi-axial geophone is sufficient, consisting of at least a vertical component and a horizontal component in a radial arrangement with respect to the known source;
2) clarity in the modeling parameters; in the present invention, the objects jointly considered are in fact influenced only by the Rayleigh wave, whereas in all the known passive methods the relative contribution of Rayleigh waves, Love waves and body waves cannot be determined, and attempts to separate the different components are particularly complex and subject to a priori decisions/assumptions. For this reason, since the positions of the many sources are not known, it is always necessary to consider and analyze both the horizontal components, whereas in the case of the present invention one is sufficient, in radial arrangement with respect to the known source;
3) unlike the MASW, MFA (or similar FTAN) methods, or passive methods such as HVSR, in the present invention the inversion procedure, based on joint inversion - that is, simultaneous/unitary - of the three mathematical objects previously identified, greatly reduces the problem of the otherwise inevitable non-uniqueness of the solution (see Dal Moro, 2012 and Dal Moro and Keller, 2013 Unambiguous determination of the Vs profile via joint analysis of multicomponent active and passive seismic data, EAGE Near Surface 2013, Proceedings 19th European Meeting of Environmental and Engineering Geophysics, Bochum, Germany, 9-11 September 2013). Note how the analysis of the dispersion of the surface waves (MASW, MFA and similar methods) does not guarantee a considerable investigative depth, whereas HVSR (and similar passive techniques) suffers from a severe non-uniqueness of the solution and to be used need further strong geological and/or geophysical data. With the present invention, on the contrary, the three mathematical objects considered unitarily (joint inversion) and acquired with a rapid field procedure, supply all the data needed for an almost univocal solution without needing to consider further geological/stratigraphical information, being the depth to which it will be possible to reconstruct the subsurface model a little more than half of the source-geophone distance;
4) unlike the traditional approaches based on the analysis of the interpreted group-velocity frequency spectrum/a (see for example Ritzwoller and Levshin, 2002, Estimating shallow shear velocities with marine multi component seismic data. Geophysics, 67, 1991-2004), the present invention not only also uses the RVSR (together with the group-velocity frequency spectra) but also provides that the data inversion is performed without any interpretation of the group-velocity frequency spectra in relation to the identification of the different modes of wave propagation present therein at the different frequencies, and, consequently, makes the user's effort considerably lighter. In fact, the user can carry out the analyses almost automatically, without intervening on the data in a decisive way. It should be considered that - in the case of velocity frequency spectra describing the group velocity - this interpretation is often, in fact, almost impracticable since the various modes interlace with each other to such an extent that they are not separable. In the present invention, in fact, the joint inversion is carried out by computing synthetic seismograms by means of which the group-velocity frequency spectra are then determined, and the RVSR of the model that is "compared" (computation of the misfit for all the three mathematical objects considered) on each occasion (iteratively) with the field data.

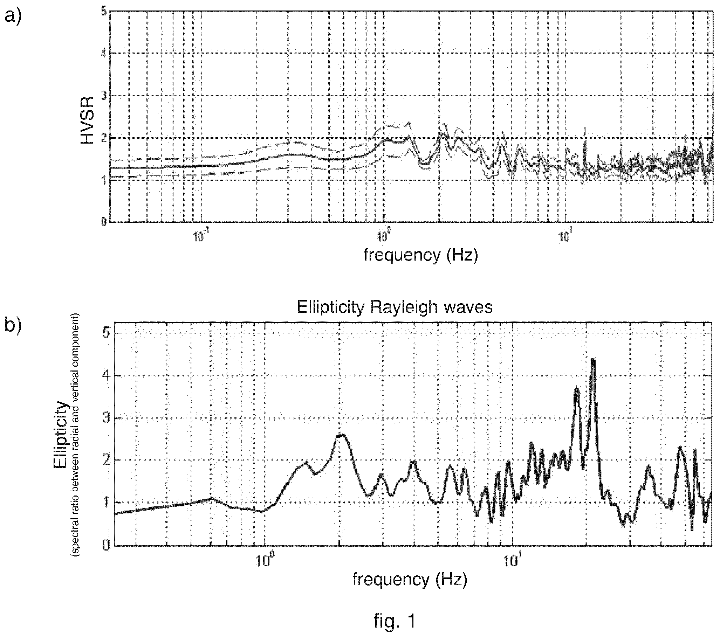

Fig. 1 shows a comparison between an HVSR acquisition by means of a classic method with a passive nature a) and an example of an acquisition geometry according to the present invention b), based on a source 12, generated by means of a vertical energization in active mode, for example by a controlled explosion or a hammer or through a weight drop, and a geophone 14, where the distance known in advance between the source 12 and geophone 14 determines the depth of penetration of the signal.

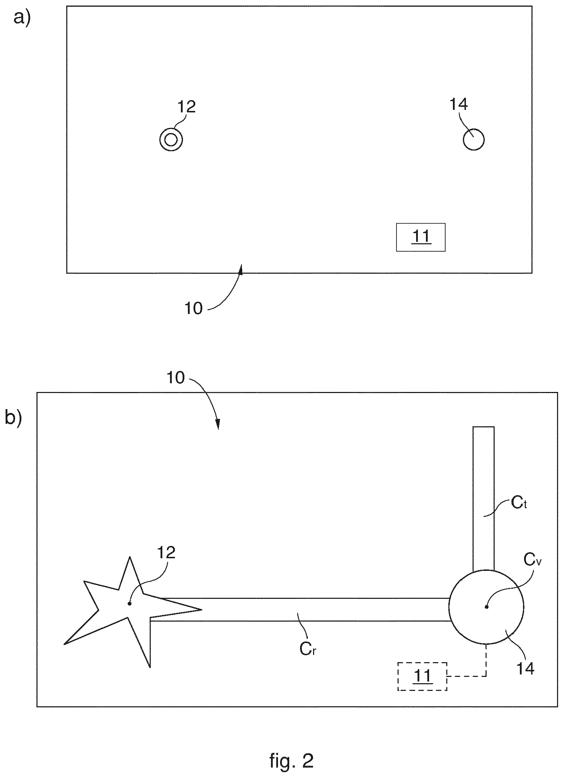

See in particular fig. 2, where a) indicates a diagram of the system used, which includes at least the geophone 14 and the seismic source 12 to generate an artificial vibration and b) indicates a qualitative representation of the seismic signal generation and recording of the vertical Cᵥ, radial Cᵣ and transverse Cₜ components of the motion then used to define the mathematical "objects" subject to analysis/inversion according to the present invention.

The radial component Cᵣ is defined in the direction and sense of the vector which connects the source 12 to the geophone 14, the transverse component Cₜ lies on the same plane as the radial component Cᵣ and intersects the latter orthogonally in correspondence with the geophone 14 and the vertical component Cᵥ lies on a plane orthogonal to the plane on which the radial component Cᵣ lies and intersects the latter orthogonally in correspondence with the geophone 14.

The modulus or intensity of the vertical Cᵥ and radial Cᵣ and transverse Cₜ components is detected by the geophone 14.

The radial component Cᵣ and vertical component Cᵥ, the latter indicated as a point in part b) of fig. 2, are always used in the present invention.

One basic form of embodiment of the present invention focuses on the analysis of the Rayleigh waves by means of a single geophone 14, and provides to analyze the development of the amplitudes over time of the vertical Cᵥ and radial Cᵣ components and the ellipticity of the produced Rayleigh wave.

This basic form of embodiment provides to acquire the following components by means of the geophone 14 and to analyze them jointly using an electronic processor 11 (fig. 2, part b), in an never previously proposed, rapid and highly automated manner:
i) the group-velocity frequency spectrum of the vertical component Cᵥ of the Rayleigh wave;
ii) the group-velocity frequency spectrum of the radial component Cᵣ of the Rayleigh wave;
iii) the RVSR spectral ratio between the radial component Cᵣ and vertical component Cᵥ which defines the ellipticity of the Rayleigh wave.

When considered together, the components i) - iii) fully describe the characteristics of the Rayleigh wave that is propagated.

The three components i) - iii) considered represent three mathematical "objects" which are complementary to each other and, used as described hereafter, allow the complete and holistic determination of the characteristics of the Rayleigh wave.

We maintain that this complete determination, afterward, gives a more robust inversion, able to determine the vertical profile of the shear-wave velocity (Vₛ) in a very constrained manner, highly automated and without considering further geological/stratigraphical information. In this way, the limits for example of the traditional HVSR method are overcome, where, due to the great non-uniqueness of the solution, it is indispensable to have and consider said geological/stratigraphical information.

In the basic mode of the present invention, the signals to be analyzed are gathered and acquired on the field using a single geophone 14, at least bi-axial, calibrated and equalized. This gives the advantage of simple acquisition, and requires a limited effort during the acquisition campaign.

The acquired signals are subsequently analyzed by the electronic processor 11.

The geophone 14 has for instance three components - a vertical one, a horizontal one in radial arrangement with respect to the source 12, and a horizontal one in transverse arrangement with respect to the source 12 - identical to the one used for instance for classical HVSR acquisitions, and the operator himself generates the waves that are then analyzed. For example a tri-axial geophone 14 is used, since this is a geophone 14 that is widespread and useful also for other types of analysis.

In any case, we maintain that, in variant forms of embodiment, for collecting data according to the present invention, it is possible to use a geophone with only two components, one vertical and one horizontal in radial arrangement with respect to the source 12, in that the information obtainable, which ignores the horizontal transverse component, can be sufficient for the main purposes of the present invention.

We maintain that the present invention, by using jointly - that is, simultaneously and unitarily - the group-velocity frequency spectra of the radial and vertical components of the Rayleigh wave together with the spectral ratio R/V defined by acquisitions of merely active nature, never used before in known methods, allows a compromise between simplicity for the data acquisition and robustness and reliability in the analysis and the results obtained.

We also maintain that the modeling criteria used for the purposes of the inversion process following the data collection is much simpler than the classic HVSR method where the signals collected, necessarily with a tri-axial geophone, are of a passive nature and the modeling is very complex since the HVSR observed is the result of many, completely uncontrolled factors, in particular considering that in this method the sources - that are considered uniformly distributed azimuthally - are not in fact known.

On the contrary, in basic forms of embodiment of the present invention, the invention is based only on "controlled" objects, since the source is known, that is, the group-velocity frequency spectra of the two components - vertical Cᵥ and radial Cᵣ - and the RVSR ratio that defines the Rayleigh-wave ellipticity are totally reproducible.

Furthermore, as mentioned above, the inversion process provided by the present invention does not necessarily require an intervention by the user, which gives a highly-automated procedure.

Compared with the classic HVSR method, the ellipticity of the Rayleigh waves exploited in the present invention is not subject to the ambiguity of the modeling parameters and weather-seasonal variations. The problems related to the non-uniqueness of the solution is obviated thanks to the joint use of the group-velocity frequency spectra of the vertical component Cᵥ and the radial component Cᵣ of the Rayleigh wave, as well as the R/V spectral ratio.

We maintain that, with respect to the ambiguity of the modeling parameters, in basic forms of embodiment of the present invention, the only waves responsible for the ratio between the radial component Cᵣ and vertical component Cᵥ are the Rayleigh waves, while the Love waves have no role. In the method proposed, in fact, since the position of the source 12 with respect to the geophone 14 is known, the ratio between the radial component Cᵣ and vertical component Cᵥ is determined only by the ellipticity of the Rayleigh waves, whereas in the classic HVSR method, since the position of the source is not known, both the horizontal components must be taken into consideration, and the relative role of Love and Rayleigh waves becomes non-determinable unless complex data processing operations are carried out on data that must be, in any case, necessarily acquired by means of a tri-axial geophone, thus representing a further variable in the inversion process which is thus totally under-determined.

In order to underline the difference between the traditional HVSR method and the ellipticity of the Rayleigh waves exploited in the method according to the present invention, fig. 1 shows the two types (respectively a) and b)) of data acquired in the same site.

We also maintain that the present invention, being based on an active source, is independent on wheather-seasonal variations and also on specific directivities of the signal which affect the traditional HVSR method.

In some forms of embodiment, the method according to the present invention provides, after the acquisition of said signals, a totally automatic inversion, carried out by the electronic processor 11.

In some forms of embodiment, the inversion is based on the evaluation of the misfit, or deviation, between the acquired field data and the signals derived during the inversion process, from a predefined mathematical model modified on each occasion in order to minimize the misfit or deviation.

In general, the inversion according to the present invention is in fact constrained by three objective functions, that is, the following three objects:
- the misfit or deviation of the group-velocity frequency spectrum of the vertical component Cᵥ of the Rayleigh wave;
- the misfit or deviation of group-velocity frequency spectrum of the radial component Cᵣ of the Rayleigh wave;
- the misfit or deviation of the RVSR that expresses the ellipticity of the Rayleigh wave.

According to the present invention, these quantities are determined starting from an acquisition performed with a single geophone 14, with at least two components, one vertical Cᵥ and one radial Cᵣ.

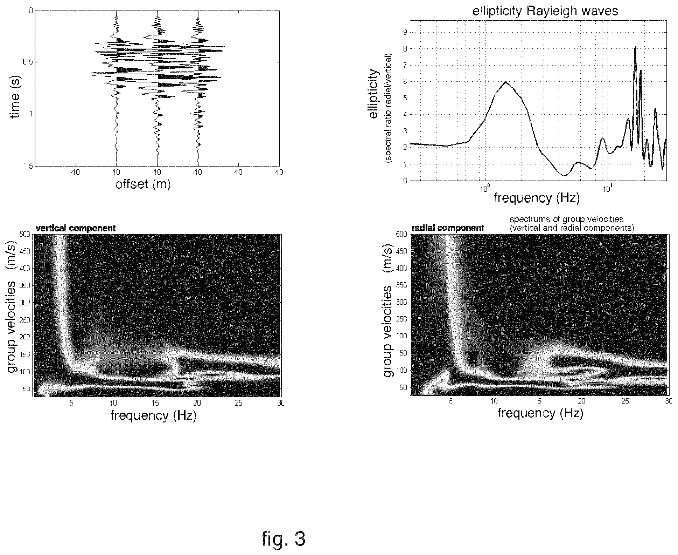

Fig. 3 shows an example of field data acquisition.

The three seismic traces acquired are shown top left, while the three objects considered, found from the processing of the seismic traces of the vertical Cᵥ and radial Cᵣ components only, and which are inverted, are:
- top right, the ellipticity of the Rayleigh waves determined by the spectral ratio between the radial component Cᵣ and vertical component Cᵥ (RVSR);
- bottom left, the group-velocity frequency spectrum of the vertical component Cᵥ and
- on the right, the group-velocity frequency spectrum of the radial component Cᵣ.

In the basic mode of the present invention, the transverse trace is not used, while it may be used in an advanced mode of the present invention as shown hereafter.

In some forms of embodiment, the inversion that follows the acquisition of the three objects can be performed by the electronic processor 11 in an automated manner and therefore without requiring a significant intervention and choices by the user. The inversion can be performed according to a multi-objective inversion scheme, which does not require any data interpretation by the user since the inversion is accomplished by generating synthetic seismograms, from which two synthetic traces are considered, relating to the vertical and radial components of the Rayleigh wave.

At this point, having available the two synthetic traces relating to the vertical and radial components, it is then possible to determine for both synthetic traces relating to the vertical component Cᵥ and radial component Cᵣ, the frequency spectrum of the group velocities and, from their spectral ratio, also the ellipticity of the Rayleigh waves, depending on the frequency.

For a series of subsurface starting models the corresponding synthetic seismograms are therefore generated.

From these we calculate:
- the group-velocity frequency spectrum of the radial component Cᵣ of the Rayleigh wave;
- the group-velocity frequency spectrum of the vertical component Cᵥ of the Rayleigh wave;
- the R/V Spectral Ratio.

At this point the misfits with respect to the corresponding components of the field data are determined.

The three misfits obtained are then used in the framework of an optimization procedure based on the Pareto front (a multi-objective optimization scheme).

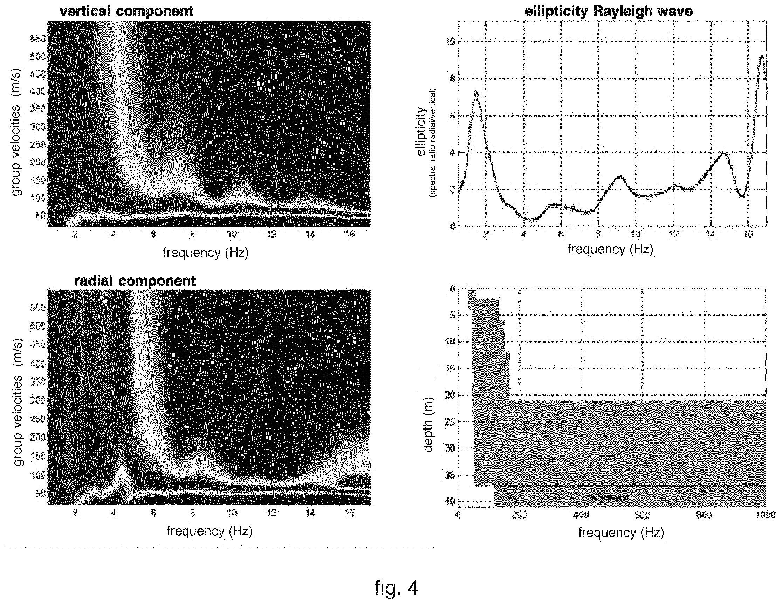

Fig. 4 shows the snapshot of a software panel from which the joint inversion of the three components considered is carried out. The search space within which the solution/model that best suits the observed data is sought, can be fixed by the user or left completely free. In this case the inversion procedure is completely automated.

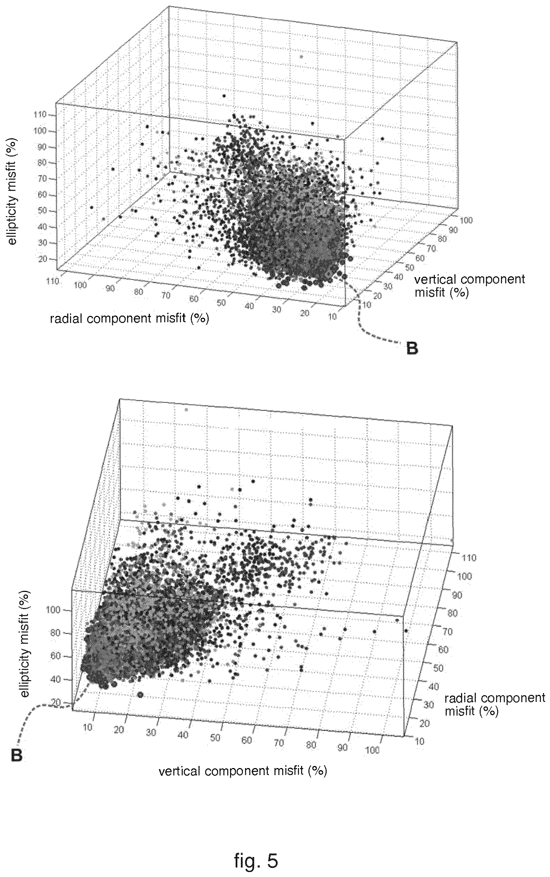

At the end of the optimization/inversion procedure, a series of "Pareto optimal" models is obtained (see fig. 5), which represent the set of final solutions. The "best" model (among those belonging to the Pareto front) is defined as the one with the minimum geometric distance with respect to the [0, 0, 0] *utopia point.* In fig. 5 the best model is indicated by the letter B.

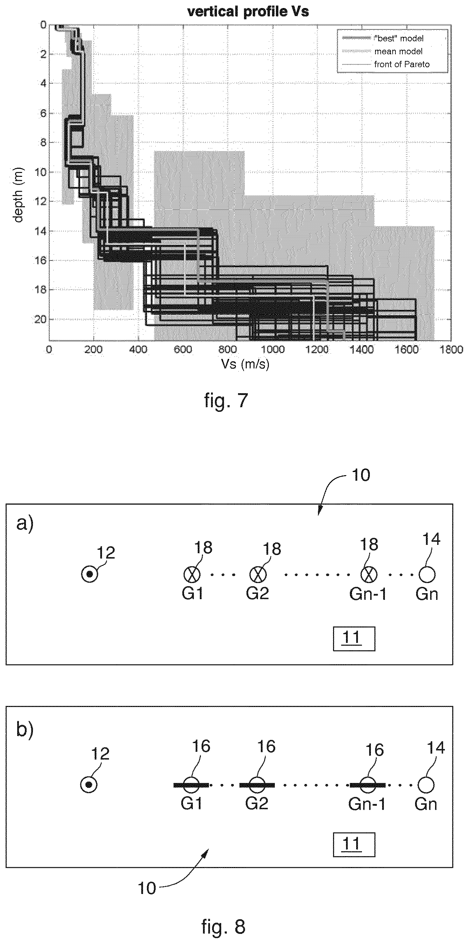

Figs. 6 and 7 show an example of inversion results.

A variant form of embodiment of the present invention provides to use both Rayleigh waves and Love waves, using a single geophone 14 of the tri-axial type. (fig. 2).

This way, therefore, a field acquisition necessary to generate and record Love waves is added.

To this purpose, leaving the general arrangement of the acquisition unchanged, a shear source is adopted. Love waves will be recorded by the transverse geophone 14 in fig. 2 and will allow to add another, fourth element objective function to the joint inversion performed with the same multi-objective procedure described above. In this variant, therefore, the four target functions comprise:
- misfit of the group-velocity frequency spectrum of the vertical component Cᵥ of the Rayleigh wave;
- misfit of the group-velocity frequency spectrum of the radial component Cᵣ of the Rayleigh wave;
- misfit of the group-velocity frequency spectrum of the Love wave;
- misfit of the R/V Spectral Ratio.

Now that we have to deal with four objective functions, a graphical representation like the one presented in fig. 5 is no longer possible, and determining the Pareto front models and the "best" model is essentially a mathematical task.

An advanced variant form of embodiment of the present invention provides to use, in addition to the single bi-axial or tri-axial geophone 14 used alone in the basic mode to detect the Rayleigh waves, also a series of common horizontal-component geophones 16, or vertical-component geophones 18, in exactly the same way as a commonly used for MASW or refraction/reflection acquisitions.

The bi-axial or tri-axial geophone 14 is located for example, but not necessarily, in the farthest position from the source 12 (Fig. 8).

The system therefore consists of a certain number of geophones 16, 18 with a single component (in fig. 8 there are n-1 in number) with, in addition, one bi-axial or tri-axial geophone 14.

This advanced configuration allows to add another target function to the three considered in the basic mode, that is, the frequency spectrum related to the phase velocities, and no longer only the group velocities considered in the basic case.

In fact, in order to define the phase velocities, it is necessary a certain number of geophones (multi-channel acquisitions) since a single channel is not sufficient.

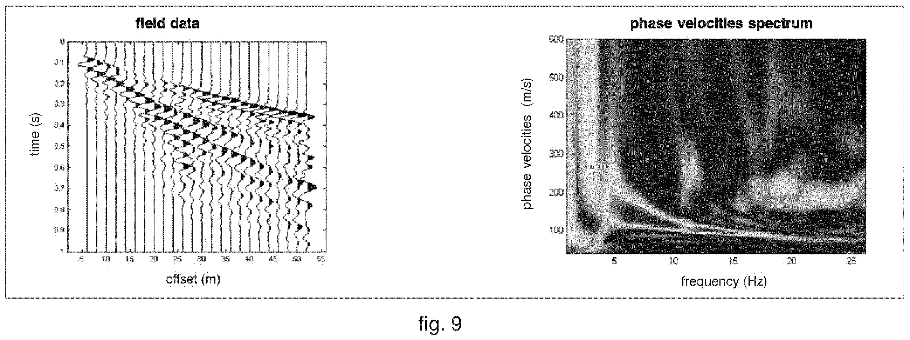

Fig. 9 shows an example of a phase-velocity frequency spectrum from a multi-channel acquisition.

The multi-channel analysis procedure will now consider four target functions, optimizing them in the same way as described above by means of a multi-objective optimization/inversion scheme:
- misfit of the group-velocity frequency spectrum of the vertical component Cᵥ of the Rayleigh wave;
- misfit of the group-velocity frequency spectrum of the radial component Cᵣ of the Rayleigh wave;
- misfit of the R/V Spectral Ratio.
- misfit of the phase-velocity frequency spectrum, possible thanks to the first n-1 channels equipped with common single-component geophones, fig. 8.

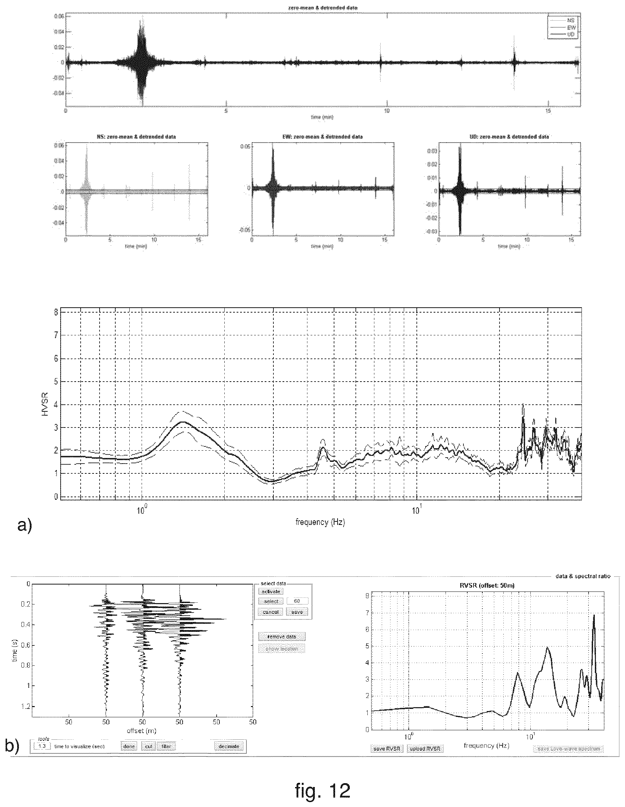

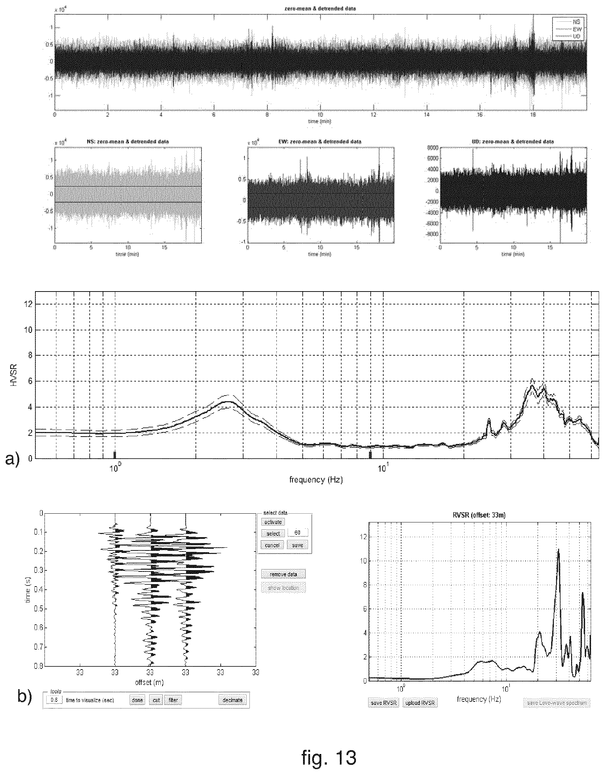

Figs. 12 and 13 are used to graphically show the difference between HVSR (from passive seismics - in this case the acquisition length is 20 minutes - see frame a) at the top in figs. 12 and 13) and RVSR (from active seismics, one of the three components used in the present invention - acquisition length of less than 1 second - frame b) at the bottom in figs. 12 and 13) - the 2 quantities relate to the same site. Note the considerable difference between the two curves, due to the fact that while RVSR is only connected to the Rayleigh-wave ellipticity (this is a function of the offset), HVSR is a much more complex "object" where Love waves also play a role. The second curve (RVSR) is determined from an active acquisition (length of the recorded trace approximately 2 seconds) where the type and location of the source is known because fixed by the user. For this reason, in order to detect the horizontal component, which in this case is influenced by Rayleigh waves only, a single horizontal geophone is necessary (in radial arrangement with respect to the source), as well as a vertical geophone.

## Claims

1. Active method to detect and analyze seismic signals, which provides to generate an artificial vibration by means of a source (12) and to use at least one at least bi-axial geophone (14) to detect and record seismic signals that comprise at least the Rayleigh wave produced by the source (12) of artificial vibration in a predefined position with respect to the geophone (14), **characterized in that** said method provides to jointly analyze at least the group-velocity frequency spectrum of the radial component (Cᵣ), the group-velocity frequency spectrum of the vertical component (Cᵥ) and the Spectral Ratio, Radial-to-Vertical Spectral Ratio, RVSR, between the radial component (Cᵣ) and the vertical component (Cᵥ), which defines the ellipticity of the produced Rayleigh waves, wherein said method provides further to carry out a joint inversion using at least the radial component (Cr), the vertical component (Cv) and the spectral ratio, RVSR, which defines the ellipticity of the produced Rayleigh waves, in order to define the shear-wave velocity (Vs) profile, wherein said inversion is based on the assessment of the misfit, or deviation between recorded seismic signals data and synthetic signals derived from a predefined mathematical model, wherein the joint inversion is based on at least three separate objective functions:
- the misfit or deviation of the group-velocity frequency spectrum of the vertical component (Cᵥ) of the Rayleigh wave;
- the misfit or deviation group-velocity frequency spectrum of the radial component (Cᵣ) of the Rayleigh wave;
- the misfit or deviation of the RVSR that expresses the ellipticity of the Rayleigh wave;
further wherein the inversion is carried out according to a multi-objective joint modality, wherein the at least three separate objective functions are simultaneously optimized and which does not require any data interpretation by the user, and which provides:
i) to consider a series of mathematical subsurface models of the original subsurface;
ii) to generate the relative synthetic seismograms;
iii) to consider, by means of the synthetic seismograms, two synthetic traces, of which at least one relates to the vertical component (Cᵥ) and at least one relates to the radial component (Cᵣ) of the Rayleigh wave;
iv) to determine, for both the synthetic traces, relating to the vertical component (Cᵥ) and the radial component (Cᵣ), the group-velocity frequency spectra and, from the corresponding Radial-to-Vertical Spectral Ratio, the ellipticity of the Rayleigh waves;
v) to compare the synthetic data of point iv) with at least the group-velocity frequency spectra and the ellipticity of the Rayleigh waves, RVSR, of the corresponding traces of the seismic signals recorded on the field in order to determine the misfit, or deviation;
vi) to perform a multi-objective optimization of the obtained misfits.

2. Method as in claim 1, **characterized in that** it detects, by means of the at least one geophone (14), the development of the amplitudes over time at least of the vertical component (Cᵥ) and of the radial component (Cᵣ), of the artificial vibration produced.

3. Method as in claim 2, **characterized in that** it calculates the spectral ratio between the radial (Cᵣ) and the vertical (Cᵥ) components in order to define the ellipticity of the Rayleigh wave.

4. Method as in any claim hereinbefore, **characterized in that** it operates a shear-wave source to generate Love waves and to analyze both the Rayleigh waves and the Love waves, using a single geophone (14) of the tri-axial type.

5. Method as in any claim hereinbefore, **characterized in that** it also uses a series of geophones with a horizontal component (16) or geophones with a vertical component (18) in order to detect and analyze phase-velocity frequency spectrum/a.

6. Method as in claim 4, **characterized in that** the inversion procedure also uses the group-velocity frequency spectrum of the Love waves.

7. Method as in claim 5, **characterized in that** the inversion also uses phase-velocity frequency spectrum/a.

8. Method as in claim 6, **characterized in that** the inversion is also based on an objective function represented by the misfit, or deviation of the group-velocity frequency spectrum of the Love waves.

9. Method as in claim 7, **characterized in that** the inversion is also based on an objective function represented by the misfit, or deviation of the phase-velocity frequency spectrum.

10. Method as in any claims from 1 to 9, **characterized in that** it provides to obtain a series of optimal models which represent the final solution, and to select a better model with a minimum geometric distance with respect to a predefined reference point.

11. Apparatus to detect and analyze seismic signals using a method as in any claims from 1 to 10, comprising a source (12) of artificial vibration and at least one at least bi-axial geophone (14) in order to detect at least the Rayleigh wave produced in an active way by a source (12) of artificial vibration in a predefined position with respect to the geophone (14) and an electronic processor (11) configured to analyze jointly at least the radial component (Cᵣ), the vertical component (Cᵥ) and the RVSR Spectral Ratio between the radial component (Cᵣ) and the vertical component (Cᵥ), which defines the ellipticity of the produced Rayleigh wave, according to the method of any of the claims 1 to 10.

## Patentansprüche

1. Ein aktives Verfahren zur Detektion und Analyse von seismischen Signalen, welches das Erzeugen einer künstlich Vibration mittels einer Quelle (12) und das Anwenden wenigstens eines biaxialen Geophones (14) zur Bestimmung bzw. Detektion und Aufnahme der seismischen Signale, welche wenigstens die durch die Quelle (12) der künstlichen Vibration in einer vorbestimmten Position bezüglich des biaxialen Geophones (14) erzeugten Raleighwellen umfassen, vorsieht, **dadurch gekennzeichnet, dass** das Verfahren das zusammengefasste Analysieren wenigstens des Frequenzspektrums der Gruppengeschwindigkeit der radialen Komponente (Cᵣ), des Frequenzspektrums der Gruppengeschwindigkeit der vertikalen Komponente (Cᵥ) und des Spektralverhältnisses, Radial-zu-Vertikal-Spektralverhältnis, RVSR, zwischen der radialen Komponente (Cᵣ) und der vertikalen Komponente (Cᵥ), welches die Elliptizität der erzeugten Raleigh-Wellen bestimmt, vorsieht, wobei das Verfahren ferner das Durchführen einer zusammengefassten Inversion unter Verwendung wenigstens der radialen Komponente (Cᵣ), der vertikalen Komponente (Cᵥ) und des Spektralverhältnisses, RVSR, welches die Elliptizität der erzeugten Raleighwellen bestimmt, vorsieht, um das Geschwindigkeitsprofil der Scherwellen (Vₛ) zu bestimmen, wobei die Inversion auf der Auswertung der Diskrepanz bzw. Passungenauigkeit oder der Abweichung zwischen den aufgezeichneten Daten der seismischen Signale und den künstlichen Signalen, abgeleitet aus einem vorbestimmten mathematischen Modell, basiert, wobei die zusammengefasste Inversion basierend auf wenigstens drei separaten Zielfunktionen basiert:
- die Diskrepanz oder Abweichung des Frequenzspektrums der Gruppengeschwindigkeit der vertikalen Komponente (Cᵥ) der Raleighwelle;
- die Diskrepanz oder Abweichung des Frequenzspektrums der Gruppengeschwindigkeit der radialen Komponente (Cᵣ) der Raleighwelle;
- die Diskrepanz oder Abweichung des RVSR, welches die Elliptizität der erzeugten Raleighwellen bestimmt;
wobei ferner die Inversion gemäß einer multikriteriellen zusammengefassten Analysemethode bzw. Optimierung durchgeführt wird, wobei die wenigstens drei separaten Zielfunktionen gleichzeitig bzw. simultan optimiert werden und es keiner Dateninterpretation durch den Anwender bedarf, und welche vorsieht:
i) Berücksichtigen einer Serie von mathematischen unterirdischen Modellen des ursprünglichen Untergrundes;
ii) Erzeugen des relativen synthetischen Seismogramms;
iii) Prüfen, mittels des synthetischen Seismogramms, von zwei synthetischen Spuren, von denen sich wenigstens eine auf die vertikale Komponente (Cᵥ) und wenigstens eine auf die radiale Komponente (Cᵣ) der Raleighwelle bezieht;
iv) Bestimmen des Frequenzspektrums der Gruppengeschwindigkeit für beide synthetischen Spuren, in Bezug auf die vertikale Komponente (Cᵥ) und die radiale Komponente (Cᵣ), des Frequenzspektrums der Gruppengeschwindigkeit und der Elliptizität der Raleighwellen aus dem entsprechenden Radial-zu-Vertikal-Spektralverhältnis;
v) Vergleichen der synthetischen Daten aus Punkt iv) mit wenigstens dem Frequenzspektrum der Gruppengeschwindigkeit und der Elliptizität der Raleighwellen, RVSR, der entsprechenden Spuren der seismischen Signale, die in dem Gebiet aufgezeichnet worden sind, um die Diskrepanz oder die Abweichung zu bestimmen;
vi) Durchführen einer multikriteriellen Optimierung der erhaltenen Diskrepanz.

2. Das Verfahren gemäß Anspruch 1, **dadurch gekennzeichnet, dass** in ihm mittels wenigstens eines Geophons (14) die zeitliche Entwicklung der Amplituden wenigstens der vertikalen Komponente (Cᵥ) und der radialen Komponente (Cᵣ) der erzeugten künstlichen Vibration erfasst wird.

3. Das Verfahren gemäß Anspruch 2, **dadurch gekennzeichnet, dass** in ihm das Spektralverhältnis zwischen der radialen (Cᵣ) und der vertikalen (Cᵥ) Komponenten berechnet wird, um die Elliptizität der Raleighwelle zu bestimmen.

4. Das Verfahren gemäß einem der vorhergehenden Ansprüche, **dadurch gekennzeichnet, dass** in ihm eine Quelle für Scherwellen angesteuert wird, um Lovewellen zu erzeugen, und sowohl die Raleighwellen als auch die Lovewellen unter Anwendung eines Geophons (14) vom triaxialen Typ zu analysieren.

5. Das Verfahren gemäß einem der vorhergehenden Ansprüche, **dadurch gekennzeichnet, dass** in ihm ebenso eine Serie von Geophonen mit einer horizontalen Komponente (16) oder Geophone mit einer vertikalen Komponente (18) eingesetzt werden, um das Frequenzspektrum der Phasengeschwindigkeit / a zu bestimmen und zu analysieren.

6. Das Verfahren gemäß Anspruch 4, **dadurch gekennzeichnet, dass** in dem Inversionsverfahren ebenso ein Frequenzspektrum der Gruppengeschwindigkeit der Lovewellen eingesetzt wird.

7. Das Verfahren gemäß Anspruch 5, **dadurch gekennzeichnet, dass** in der Inversion ebenso das Frequenzspektrum der Phasengeschwindigkeit / a eingesetzt wird.

8. Das Verfahren gemäß Anspruch 6, **dadurch gekennzeichnet, dass** die Inversion ebenso auf einer Zielfunktion, dargestellt durch die Diskrepanz oder die Abweichung des Frequenzspektrums der Gruppengeschwindigkeit der Lovewellen, basiert.

9. Das Verfahren gemäß Anspruch 4, **dadurch gekennzeichnet, dass** die Inversion ebenso auf einer Zielfunktion, dargestellt durch die Diskrepanz oder die Abweichung des Frequenzspektrums der Phasengeschwindigkeit, basiert.

10. Das Verfahren gemäß einem der Ansprüche 1 bis 9, **dadurch gekennzeichnet, dass** in ihm das Erhalten einer Serie von optimalen Modellen, welche die finale Lösung darstellen, und das Auswählen eines besseren Models mit einem minimale Geometrieabstand bezüglich einem vorbestimmten Referenzpunkt vorgesehen ist.

11. Vorrichtung zur Detektion und Analyse von seismischen Signalen unter Anwendung eines Verfahrens gemäß einem der Ansprüche 1 bis 10, umfassend eine Quelle (12) einer künstlichen Vibration und wenigstens ein wenigstens biaxiales Geophon (14) zur Bestimmung bzw. Detektion wenigstens der in einer aktiven Art und Weise mittels einer Quelle (12) einer künstlichen Vibration in einer vorbestimmten Position hinsichtlich des Geophons (14) erzeugten Raleighwelle sowie einen elektronischen Prozessor (11), der zur zusammengefassten Analyse wenigstens der radialen Komponente (Cᵣ), der vertikalen Komponente (Cᵥ) und des RVSR-Spektralverhältnisses zwischen der radialen Komponente (Cᵣ) und der vertikalen Komponente (Cᵥ), welches die Elliptizität der erzeugten Raleighwelle gemäß dem Verfahren nach irgendeinem der Ansprüche 1 bis 10 bestimmt, ausgestaltet ist.

## Revendications

1. Méthode pour détecter et analyser des signaux sismiques, qui consiste à générer une vibration artificielle au moyen d'une source (12) et à utiliser au moins un géophone au moins biaxial (14) pour détecter et enregistrer des signaux sismiques comprenant au moins l'onde de Rayleigh produite par la source (12) de vibration artificielle dans une position prédéfinie par rapport au géophone (14), **caractérisée en ce que** ladite méthode consiste à analyser conjointement au moins le spectre de fréquences de vitesse de groupe de la composante radiale (Cᵣ), le spectre de fréquences de vitesse de groupe de la composante verticale (Cᵥ) et le rapport spectral, rapport spectral radiale à verticale, RVSR, entre la composante radiale (Cᵣ) et la composante verticale (Cᵥ), qui définit l'ellipticité des ondes de Rayleigh produites, dans lequel ladite méthode prévoit en outre de réaliser une inversion conjointe en utilisant au moins la composante radiale (Cᵣ), la composante verticale (Cᵥ) et le rapport spectral, RVSR, qui définit l'ellipticité des ondes de Rayleigh, afin de définir le profil de vitesse d'onde de cisaillement (Vs), dans lequel ladite inversion est basée sur l'évaluation de l'inadéquation ou de l'écart entre des données de signaux sismiques enregistrées et des signaux synthétiques dérivés d'un modèle mathématique prédéfini, dans laquelle l'inversion conjointe est basée sur au moins trois fonctions objectives distinctes :
- l'inadéquation ou l'écart du spectre de fréquences de vitesse de groupe de la composante verticale (Cᵥ) de l'onde de Rayleigh ;
- l'inadéquation ou l'écart du spectre de fréquences de vitesse de groupe de la composante radiale (Cr) de l'onde de Rayleigh ;
- l'inadéquation ou l'écart du RVSR qui exprime l'ellipticité de l'onde de Rayleigh ;
dans laquelle l'inversion est en outre effectuée selon une modalité conjointe à plusieurs objectifs, dans laquelle les au moins trois fonctions objectives distinctes sont optimisées simultanément et ne nécessitent aucune interprétation de données par l'utilisateur, et qui fournit :
i) la prise en considération d'une série de modèles mathématiques de sous-surface du sous-sol d'origine ;
ii) la génération des sismogrammes synthétiques relatifs ;
iii) la prise en considération, au moyen des sismogrammes synthétiques, de deux traces synthétiques dont au moins une concerne la composante verticale (Cv) et dont au moins une concerne la composante radiale (Cᵣ) de l'onde de Rayleigh ;
iv) la détermination, pour les deux traces synthétiques relatives à la composante verticale (Cᵥ) et à la composante radiale (Cᵣ), des spectres de fréquences de vitesse de groupe et, à partir du rapport spectral radiale à verticale, de l'ellipticité des ondes de Rayleigh ;
v) la comparaison des données synthétiques du point iv) avec au moins les spectres de fréquences de vitesse de groupe et l'ellipticité des ondes de Rayleigh, RVSR, des traces correspondantes des signaux sismiques enregistrés sur le terrain afin de déterminer l'inadéquation, ou l'écart ;
vi) la mise en oeuvre d'une optimisation à plusieurs objectifs des inadéquations obtenues.

2. Méthode selon la revendication 1, **caractérisé en ce qu'**elle détecte, par l'intermédiaire du au moins un géophone (14), le développement des amplitudes au cours du temps au moins de la composante verticale (Cᵥ) et de la composante radiale (Cᵣ), de la vibration artificielle produite.

3. Méthode selon la revendication 2, **caractérisée en ce qu'**elle calcule le rapport spectral entre les composantes radiale (Cᵣ) et verticale (Cᵥ) pour définir l'ellipticité de l'onde de Rayleigh.

4. Méthode selon l'une quelconque des revendications précédentes, **caractérisée en ce qu'**elle exploite une source d'ondes de cisaillement pour générer des ondes de Love et pour analyser à la fois les ondes de Rayleigh et les ondes de Love, en utilisant un seul géophone (14) du type triaxial.

5. Méthode selon l'une quelconque des revendications précédentes, **caractérisée en ce qu'**elle utilise également une série de géophones avec une composante horizontale (16) ou de géophones avec une composante verticale (18) afin de détecter et d'analyser le ou les spectres de fréquences de vitesse de phase.

6. Méthode selon la revendication 4, **caractérisée en ce que** la procédure d'inversion utilise également le ou les spectres de fréquences de vitesse de groupe des ondes de Love.

7. Méthode selon la revendication 5, **caractérisée en ce que** l'inversion utilise également le ou les spectres de fréquences de vitesse de phase.

8. Méthode selon la revendication 6, **caractérisée en ce que** l'inversion est également basée sur une fonction objective représentée par l'inadéquation ou l'écart du spectre de fréquences de vitesse de groupe des ondes de Love.

9. Méthode selon la revendication 7, **caractérisée en ce que** l'inversion est également basée sur une fonction objective représentée par l'inadéquation ou l'écart du spectre de fréquences de vitesse de phase.

10. Méthode selon l'une quelconque des revendications 1 à 9, **caractérisée en ce qu'**elle prévoit d'obtenir une série de modèles optimaux qui représentent la solution finale, et de sélectionner un meilleur modèle avec une distance géométrique minimale par rapport à un point de référence prédéfini.

11. Appareil pour détecter et analyser des signaux sismiques en utilisant une méthode selon l'une quelconque des revendications 1 à 10, comprenant une source (12) de vibrations artificielles et au moins un géophone au moins biaxial (14) pour détecter au moins l'onde de Rayleigh produite de manière active par une source (12) de vibrations artificielles dans une position prédéfinie par rapport au géophone (14), et un processeur électronique (11) configuré pour analyser conjointement au moins la composante radiale (Cᵣ), la verticale composant (Cᵥ) et le rapport spectral RVSR entre la composante radiale (Cᵣ) et la composante verticale (Cᵥ), qui définit l'ellipticité de l'onde de Rayleigh produite, selon le méthode de l'une quelconque des revendications 1 à 10.
